Europäisches Patentamt

European Patent Office

Office européen des brevets

(19)

(11) Publication number: **0 103 545**
A2

(12) **EUROPEAN PATENT APPLICATION**

(21) Application number: **83810405.7**

(22) Date of filing: **06.09.83**

(51) Int. Cl.³: **H 05 B 7/101**

(30) Priority: **13.09.82 CH 5412/82**

(43) Date of publication of application: **21.03.84**
**Bulletin 84/12**

(84) Designated Contracting States: **AT BE CH DE FR GB IT
LI LU NL SE**

(71) Applicant: **Arc Technologies Systems, Ltd., Box 61,
Georgetown Grand Cayman (KY)**

(72) Inventor: **Taube, Tom, Dr., Im Wolfsgarten 11,
Erlangen-Steudach (DE)**
Inventor: **Lauterbach-Dammler, Inge, Dr., Peter-Vischer
Strasse 15, Nürnberg (DE)**

(74) Representative: **Kügele, Bernhard, c/o ELTECH
SYSTEMS CORPORATION 17-19, Chemin du
Champ-d'Anier, CH-1209 Le Petit-Saconnex Genève
(CH)**

(54) **Electrode for arc furnaces.**

(57) Electrode for arc furnaces, comprising a water-cooled upper section of metal and a replaceable lower section of consumable material, which are connected by means of a threaded nipple or the like.

To obtain signals which inform on the presence of the consumable section, there is at least one light-receiving element (11) located in the connection zone (21) of the cooled metal shaft (2) and the consumable section (3). The light signal falling on the light-receiving element (11) in the absence of the consumable section (3) is passed in an appropriate manner via a light wave guide (13) to the furnace control which releases the safety system.

- 1 -

0103545

<span style="text-decoration: underline">Electrode for Arc Furnaces</span>

## FIELD OF THE INVENTION

The invention relates to an electrode for arc furnaces, comprising a water-cooled upper section of metal (metal shaft) and a lower section of consumable material (consumable section), which are connected by means of a threaded nipple or the like. Such electrodes are used in the production of steel.

## BACKGROUND OF THE INVENTION

In conventional steel production by means of electric arc furnaces, the graphite or carbon electrodes used are consumed not only at their lower end, where the arc is drawn, but, as a result of the heat in the interior of the furnace, also in longitudinal direction along their periphery. As a consequence, the electrode is consumed in such a way that it assumes a conical shape at the lower end, which is typical of such electrodes. This diameter reduction leads to a faster consumption of material at the electrode tip. In addition, due to the strong vibrations and rough environment in the interior of the furnace, the tapering of the diameter causes the electrode ends to break off precipitately. The resulting high consumption of electrodes contributes to the high costs incurred per ton of steel produced.

To avoid these disadvantages different types of electrodes were developed, with their sheath e.g. being coated with a protective layer or being water-cooled.

0103545

Water-cooled electrodes are e.g. known from DE-AS 2 430 817
and DE-AS 2 739 483. Such electrodes essentially comprise a
water-cooled upper section of metal and a lower section of
consumable material (wearing section), e.g. of graphite or
carbon, which are connected by means of a threaded nipple or
the like. In their upper metal shaft, such electrodes have
supply and return ducts for the cooling water which either
consist of a group of ducts connected with each other or
which comprise a central supply duct and a ring-shaped outer
return duct. These ducts lead to the front face of the metal
shaft which borders on the wearing section, thus providing
satisfactory cooling of this section. As a result, certain
advantages are obtained, such as uniform temperatures in the
peripheral direction of the electrode and an optimum thermal
balance in case of the slightest thermal stress.

A further advantage is that the replacement of the consumed
lower section by a new section does not involve any difficulties
arising from distortions caused by excessively high temperatures
in the region of the connection nipple, and that the sealing
between electrode and cover opening, through which the electrode
is inserted, does not involve major problems, which is due
to the fact that the cross-section of the upper electrode
section remains unchanged for lack of wear and tear and/or
side oxidation.

When such conventional water-cooled electrodes are used, it is,
however, possible that the loss of the wearing section on
account of external influences, such as scrap movement,
vibrations, uneven pressures,or the complete unnoticed
consumption of this electrode section leads to the development
of an electric arc between metal shaft and broken tip of
the wearing section and/or molten metal, which leads to the
destruction of the water-cooled metal shaft. Apart from the
fact that the destruction of the metal shaft is costly,

0103545

as it has to be replaced by another shaft to be kept available, it implies great danger for the operating personnel and the furnace plant as a whole, since cooling water may pass from the destroyed metal section into the molten metal.

European patent application 0 012 573 (British Steel) describes a water-cooled electrode in which inert gas is passed under pressure via appropriate ducts in the interior of the metal shaft, essentially in axial direction, to the front connection area between metal shaft and wearing section. If the consumable section is securely fastened and not defective, a relatively constant gas pressure will build up. If a pressure drop is noticed, this may serve as a signal indicating that the active and metal sections have broken, or that there must have been a major consumption or some other mistake in the connection between the two sections. The disadvantage of this conventional electrode is, however, that considerabe, uncontrollable pressure losses do not produce clear signals. This may be explained by the fact that, firstly, the contact areas of the two sections are not completely even and that, secondly, graphite is a porous material, which means that no reliable gas sealings can be obtained. Thus it may be possible that the gas pressure registered varies from electrode to electrode or even within the same electrode, depending on which type of consumable section is inserted in which manner.

Furthermore, on account of the fact that the gas monitoring duct is centrally located it is not possible to notice a partial fracture or a one-sided consumption. Moreover, the signal obtained is an essentially constantly rising curve, practically a track which permits only a delayed reaction to the signal.

- 4 -

0103545

Due to such a delay, the command for the interruption of the current supply and the removal of the electrode will also be delayed. It is, therefore, not possible to prevent the destruction of the metal shaft and thus a potential leakage in time.

## OBJECT OF THE INVENTION

The object of the present invention is to develop a water-cooled electrode for arc furnaces which produces a reliable clear signal, if the consumable section breaks or is somehow destroyed. This signal should make it possible to remove the damaged electrode from the dangerous zone rapidly and without delay in order to avoid any danger for personnel and plant. The electrode should have a simple design and should neither be affected by higher temperatures nor by electric and magnetic fields.

This problem is solved by an electrode for electric arc furnaces which comprises a water-cooled upper section of metal (metal shaft) and a replaceable lower section of consumable material (consumable section), which are connected by a threaded nipple or the like. To obtain signals, there is at least one light-receiving element in the connection zone of the cooled metal shaft and the wearing section. This light-receiving element may be one single element which is located centrally in the connection zone, or there may be a plurality of light-receiving elements which are arranged around the electrode axis in a ring-shaped manner on the outer edge of the connection zone.

On account of the presence of at least one light-receiving element in the connection zone of the two electrode sections, which is in accordance with the invention, in case of a loss of the consumable section it is possible to use the light produced by the light intensity of the molten metal as a
signal indicating the destruction of the electrode. Such
light signals are highly advantageous, as they pass on
the immediate change dark/light as a no/yes message, which
is a clear signal that can be rapidly translated.
In case of the destruction of the wearing section and
a "yes" signal, the whole plant may be switched off,
e.g. by means of an emergency switch, with the electrode
being removed from the dangerous zone by operating the
respective lifting contrivance. Thus it is neither possible
that an electric arc develops between the metal shaft and
the wearing section that has broken off or the molten metal,
nor is it possible that cooling water leaks through the
destroyed metal shaft, thus passing into the molten metal.
In this way the furnace is protected and the operating
personnel is not exposed to any danger. The arrangement of
a plurality of light-receiving elements in an essentially
concentric manner has the further advantage that if only
part of the wearing section breaks or if it is consumed
on one side only, at least one of the light-receiving elements
located in the exposed sector will produce a signal, which
is not possible if a single light-receiving element is
arranged centrally.

It is advantageous if the light-receiving element is an
optical system of glass with an attached light wave guide
whose one front face reaches into the connection zone between
the two electrode sections. Any conventional light wave guide
may be used, including synthetic, glass or quartz fibre guides.
In this specific case it is recommended to use a glass or
quartz fibre guide because they have a higher heat resistance.
The advantage of fibre guides is that they can be fastened
easily and that , on account of their ductility, they can
pass through different elements or be passed to other elements
without the necessity of bending the guides, which would considerably reduce the transmission of light, i.e. the transmission of signals.

It is useful to lead the light wave guides in the interior of the meta:. shaft essentially parallel to the axis in such a manner that they protrude beyond the top of the electrode, since in case of a plurality arrangement each light wave guide is drawn up separately in the cooled metal shaft, or the guides are gathered already at the lower end of the metal shaft, leaving the electrode as one fibre guide bundle. The central, bundled arrangement of the guides is also advantageous because it permits a simple design of this electrode section.

Furthermore, it is advantageous to connect the glass fibre guides used as light-conducting elements to a detector outside the electrode which transduces the light signals into electrical signals (so-called opto-detectors). If there is a plurality of light wave guides in the connection zone, it is possible to connect each light wave guide to a separate opto-detector, with each detector transducing the received light signal into an electrical signal. Another possibility is to connect a plurality of single light wave guides jointly to one single detector or to connect fibre guides of the same type, which are already bundled in the interior of the electrode section, to one detector.

One advantageous type of embodiment is realized if in the front face of the metal shaft at the exit opening of the light wave guide a quartz glass window is built in in such a manner as to shield the front face of the optical system of glass, which is basically located above the window, against temperature, gas, and other harmful influences. From the viewpoint of design, this may be solved in the most varied manners, e.g. the glass may be glued from the front face into a suitably round opening of a somewhat larger diameter than the bore for the guide or it may be fastened by other conventional means, or it may be inserted into the front face from the interior of the electrode. At the same time, the fibres of the respective light wave guide are connected to the optical system of glass in a conventional manner, and fastened behind the quartz window in such a manner that the light incidence is optimal. The other end of the light wave guide is connected to the opto-detector in a conventional manner, e.g. the end of the guide is polished and directly directed to the photodiode contained in the detector.

The opto-detector triggers a logic element, which may e.g. be a relay,or it produces a TTL-CMOS compatible output level which is passed on to the process computer of the furnace. The fact that the furnace plant is equipped with an emergency switch for switching off all operations, is very useful, the entire power supply can be switched off by means of this single switch. The logic element of the detector is connected to this emergency switch of the furnace plant as well as to the contrivance for the insertion or removal of the electrode, in such a manner that upon the receipt of a certain signal the current supply is switched off and the electrode is lifted from the interior of the furnace. Thus optimum safety precautions are obtained for the entire plant.

Moreover, to provide an even greater protection of the electrode, protective gas may be blown around the exposed metal shaft, if a "yes" message is received.


BRIEF DESCRIPTION OF THE DRAWINGS

The invention will be described in greater detail in connection with the accompanying drawings in which
Figure 1 is an axial section of an electrode in which one single light-receiving element is located.
Figure 2 is an axial section of an electrode in which a plurality of light-receiving elements are located.

0103545

### DETAILED DESCRIPTION OF THE DRAWINGS

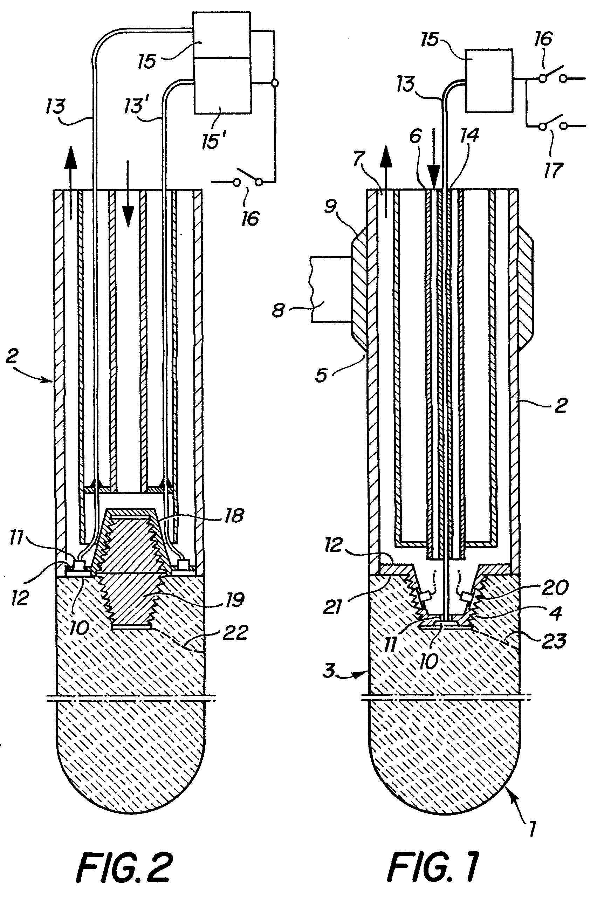

Figure 1 shows the composite electrode 1, which comprises an upper metallic section, the metal shaft 2, and a replaceable lower section of consumable material, the consumable section 3. At its front face, the metal shaft 2 has a protuberance with the shape of a threaded nipple that fits into the respective threaded bore of the wearing section 3. The metal shaft 2 essentially comprises a cylinder-shaped sheath 5, in which a central supply duct 6 and an outer ring-shaped return duct 7 for the cooling water are located in a concentric manner. The cooling water enters the metal shaft at the center through the supply duct 6 and flows back through the outer ring-shaped return duct 7 in such a manner that it flushes the sheath 5 from the inside, which provides good cooling of the metal sheath. At its upper end, the electrode 1 is held by a support arm 8 equipped with a holder, with the support arm being connected to an appropriate contrivance for the insertion or removal of the electrode from the furnace in axial direction.
Furthermore, the electrode has contact jaws 9. The electric current required for the production of the electric arc passes from the support arm 8 via these contact jaws.

Essentially in the middle of the lower front wall of the metal shaft 2, i.e. in the front wall of nipple 4, there is a fused quartz window 10, whose lower area basically coincides with the front face of the nipple. Above the fused quartz window, the end of a light wave guide 13, which is connected to an optical system of glass, is located in an appropriate bore of the front wall of nipple 4. Essentially at the centre, the light wave guide 13, which is protected by a pipe 14, is passed out of the interior of the electrode, with its other end being connected to an opto-detector 15.

The detector 15 in turn, or its logic element, or the triggered
control unit is connected to an emergency switch 16 of the
furnace plant by which the current supply of the electrodes
may be interrupted. In the presence of a "yes" signal, the
electrode is withdrawn from the interior of the furnace via
this emergency switch 16 or via another switch 17 for the
hydraulic insertion or removal of the electrode, which is
operated by the same logic element of the detector 15
simultaneously with the emergency switch 16.

The electrode shown in Figure 2 has an indentation in the
form of a threaded ring which is located at the center  of
the front face of the metal shaft 2. One half of a nipple 19
is screwed into the thread of this ring, while the other
half is screwed into the front face of the consumable section 3.
In the ring-shaped front face 12 next to the threaded ring 18
a plurality of optical systems of glass with light wave guides 13
in respective bores which are parallel to the axis are located
behind quartz windows in a ring-shaped manner around the axis
of the electrode. The other ends of the light wave guides 13
are each inserted into detectors 15 which, in turn, are connected
to an emergency switch 16.

The ends 11 of the light wave guides 13 which are connected to
the optical system of glass, may, with or without fused quartz
windows 10 before  them, also be located in Item 20, which is
shown in Figure 1 in dashed lines, in the threaded part of
nipple 4 - preferably a plurality of them distributed over the
periphery.

The described electrode, particularly its system of signals,
functions as follows: If, as a result of external influences
the consumable section breaks above the front face of nipple 4
or in the connection area 21 between front face of wearing
section 3 and front wall 12 of metal shaft 2, light will fall
on the front face of the nipple and thus through the quartz

0103545

window 10 on the front face of the optical system of glass
which bundles it to the connected end 11 of the light wave
guide 13. Having been completely multiply reflected, the light
shining into the light wave guide 13 will be passed on to the
opto-detector 15. Here the light falls directly or indirectly
on a photodiode, which produces an electric current that
operates the emergency switch 16 either directly via a relay
or via a computer-compatible signal and a process computer.
As a result, the entire current supply of the furnace plant
and/or the electrode 1 is switched off, while the hydraulic
or electro-mechanical system for the withdrawal of the
electrode 1 from the interior of the furnace is triggered off.

If the electrode breaks e.g. along the dashed line 22 shown
in Figure 2, the end of the light wave guides, which are now
exposed, will take up the respective light and pass it on
to the detector(s), which results in a switch-off of the
entire plant. In case of a breaking line 23 as shown in
Figure 1 light can only be received if the light wave guides
are located in Items 20. In this case, the individual guide
attached to the front face of the nipple will not be able to
take up the respective signal. This shows that it is especially
advantageous if a plurality of light wave guides are located
as far as possible on the outside of the connection area.

0103545

CLAIMS

1. An electrode for arc furnaces, comprising a water-cooled upper section of metal (metal shaft) and a replaceable lower section of consumable material (consumable section), which are connected by means of a threaded nipple or the like, characterized by at least one light-receiving element (11) for signalling, being located in the connection zone (21) of the cooled metal shaft (2) and the consumable section (3).

2. The electrode of claim 1, said light-receiving element (11) being basically arranged at center.

3. The electrode of claim 1, with one or a plurality of light-receiving elements being basically arranged around the electrode axis in a ring-shaped manner.

4. The electrode of claims 1 to 3, the light-receiving element constituting an optical system of glass whose one side reaches close to the connection zone (21) and is protected by a fused quartz window (10).

5. The electrode as claimed in any of the preceding claims, the signal received by the optical system being passed to a light wave guide (13)

6. The electrode as claimed in the preceding claims, said light wave guides (13) in the interior of the metal shaft (2) protruding beyond the top of the electrode (1) and being connected to an opto-detector (15) located outside the electrode (1).

- 12 -

0103545

7. The electrode as claimed in the preceding claims, in case
of a plurality of light wave guides (13) each guide being
connected to a separate opto-detector (15).

8. The electrode as claimed in the preceding claims,
said light wave guides (13) being passed in a bundle
to one single opto-detector (15), if there is a plurality
of light wave guides (13) arranged in one electrode (1).

9. The electrode as claimed in the preceding claims,
the opto-detector used (15) having a TTL-CMOS compatible
output level.

10. Use of an electrode as claimed in any of the preceding
claims in an arc furnace plant which has an emergency
switch (16) connected to the opto-detector (15) for
switching off electricity and operating a system
for the removal of the electrode (1).

FIG.2

FIG.1

0103545